# EUROPÄISCHE PATENTSCHRIFT

(11) **EP 0 847 210 B1**
(45) Veröffentlichungstag und Bekanntmachung des Hinweises auf die Patenterteilung: **04.01.2006**
(21) Anmeldenummer: 97119992.2
(22) Anmeldetag: 14.11.1997
(51) Int. Cl.: H04Q 7/22, H04Q 7/30

(54) **Verfahren zum Übertragen von Daten, insbesondere von GSM-Daten**
Method of data transmission, especially GSM data
Méthode de transmission de données, notamment de données GSM

(30) Priorität: 04.12.1996 DE 19650140
(43) Veröffentlichungstag der Anmeldung: 10.06.1998
(73) Patentinhaber: ROBERT BOSCH GMBH, 70442 Stuttgart (DE)
(72) Erfinder: Mueller, Joerg-Martin, 71409 Schwaikheim (DE)

(56) Entgegenhaltungen:
- EP-A- 0 332 345
- WO-A-96/23297
- WO-A-96/32823
- WO-A-97/20440

## Beschreibung

Die Erfindung betrifft ein Verfahren zum Übertragen von Daten, insbesondere GSM-Daten zwischen mindestens zwei Teilnehmern.

### Stand der Technik

Bei bisherigen GSM-Datenverbindungen, insbesondere für digitalisierte Sprachdaten, zwischen mobilen Teilnehmern über ein Kommunikationsnetz, beispielsweise das öffentliche Fernsprechnetz (PSTN - Public Switched Telephone Network), wurden die GSM-Daten in GSM-Format in das Rahmenformat des Kommunikationsnetzes - 64 kbit/s PCM bei PSTN - mittels einer Umcodiereinrichtung/einem Transcoder umgesetzt. Eine solche Transcodierung erfolgt beim Mobilfunksystem DMCS 900 in den Basisstationen bzw. an der A-Schnittstelle beim Übergang auf das PSTN-Kommunikationsnetz. Nach der GSM-Recommendation 08.60/08.61 erfolgt die digitale Sprachübertragung in sogenannten "TRAU-frames" (transcode and rate adaptor unit); d. h. Übertragungsrahmen im 16 kbit/s-Format bei FR (Full Rate) Übertragung und 8 kbit/s oder auch 16 kbit/s bei HR (Half Rate) Übertragung.

Aus der WO 96/32 823 A 1 wird für eine Übertragung von GSM-Daten zwischen einem rufenden und einem gerufenen Teilnehmer ein vorgegebenes Rahmenformat verwendet. Der Datenstrom zwischen zwei Transcodern (Umcodiereinrichtungen) wird unterteilt in einen Datenstrom mit PCM-Sprachabtastwerten und einen Subdatenstrom mit Sprachparametern. Bei Verlust einer Synchronisierung während einer bestehenden Verbindung werden TRAU-Rahmen zwischen den Transcodern ausgetauscht, um eine zuvor bestandene transparente TFO (tandem free operation)-Verbindung wieder herzustellen bzw. zu resynchronisieren. Die TRAU-Rahmen sind in jedem PCM-Abtastwert eingebettet.

Aus der US 5,091,945 ist es bekannt, anstelle von Sprachdaten nur Signalparameter (Sprachparameter) zu übertragen, aus denen die Nutzdaten wieder rekonstruiert werden können.

### Vorteile der Erfindung

Mit den Maßnahmen gemäß Anspruch 1 ergibt sich eine Verbesserung der Qualität übertragener Daten, insbesondere von GSM-Sprachdaten, insbesondere bei Tandembetrieb bei Verbindungen zwischen mobilen Teilnehmern. Durch die gleichzeitige Übertragung von Abtastwerten, z. B. PCM-Werten, und Signalparametern zur Sprachdatenrekonstruktion sind die Störungen bei einer Transcodiereinrichtung, die nicht für den tandemfreien Betrieb mit transparenter Durchschaltung von TRAU-Rahmen ausgestattet ist, geringer. Denn es werden auch bei der Übertragung von Kennungsinformationen immer noch Sprachdaten im ersten Datenstrom übertragen. Darüber hinaus wird mit den Maßnahmen gemäß Anspruch 1 sichergestellt, dass bei Verlust des tandemfreien Betriebs mit transparenter Durchschaltung von TRAU-Rahmen eine Resynchronisierung wieder schnell erreicht werden kann; d.h. eine vorher zustande gekommene transparente Durchschaltung nach Beendigung einer Störung wieder aufgenommen werden kann. Die Erfindung bietet den Vorteil, dass im Gegensatz zur WO 96/32 823 A1 keine permanente Signalisierungsinformation gesendet werden muss.

Auch bei Handover-Betrieb bietet die Erfindung Vorteile. Die Erfindung ist einfach in bestehende Systeme zu implementieren. Nur die Sprach-Transcoder eines Netzes sind betroffen. Beispielsweise werden von den 8 Bit pro Sprachabtastwert die beiden niedrigwertigsten Bits durch einen TRAU-Rahmen ersetzt (die Sprache wird dann auf 6 Bits reduziert), in welchem Kennungsinformation/Synchroninformation eingeblendet werden kann, um die Transcodiereinrichtungen aufeinander zu synchronisieren.

Im Gegensatz zu Lösungen nach dem Stand der Technik werden beim tandemfreien Betrieb immer PCM-Abtastwerte und Signalparameter zur Nutzdatenrekonstruktion parallel und gleichzeitig übertragen, auch wenn unterschiedliche Codierverfahren z.B. half-rate/full-rate, eingesetzt werden.

Bei einem Handover, d. h. bei einem Wechsel auf eine andere Transcodiereinrichtung, kann ein Rahmenverlust schnell festgestellt werden, bzw. vermieden werden, daß ungültige Rahmen als TRAU-Rahmen weiterverarbeitet werden. Eine nicht zum tandemfreien Betrieb ausgestattete Transcodiereinrichtung kann während eines Synchronisationsvorganges schon Sprachabtastwerte verarbeiten. Wenn nach abgeschlossener Synchronisation anstelle der Abtastwerte ein reduziertes Ruhemuster gesendet wird, kann der Sprachdecoder der Transcodiereinrichtung abgeschaltet werden oder für andere Zwecke, z.B. zur Codeumsetzung Full Rate/Half Rate im Down-link-Pfad verwendet werden.

### Zeichnungen

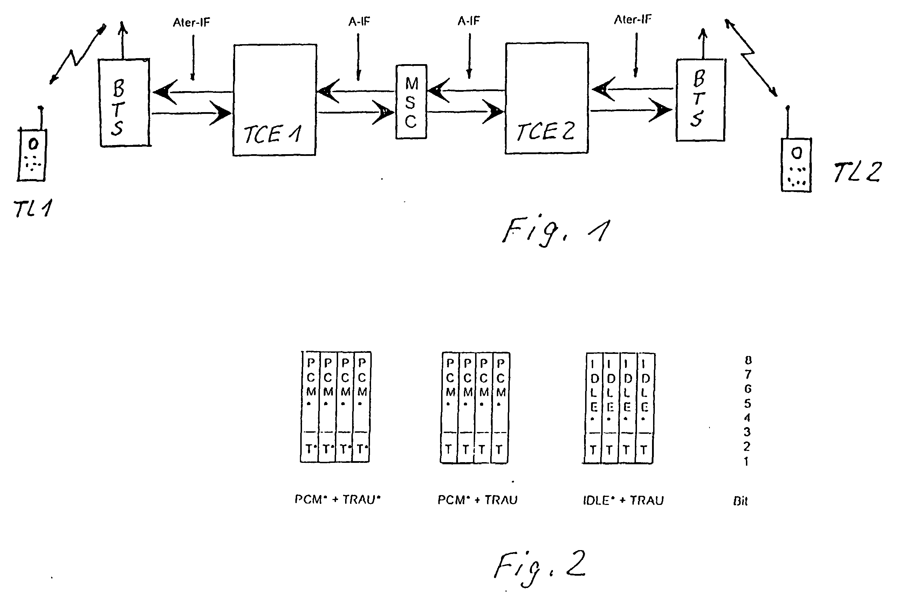

Figur 1 zeigt den Aufbau einer Verbindung zwischen zwei Teilnehmern,
Figur 2 die Daten einer Übertragungsschnittstelle in zeitlicher Abfolge,
Figur 3 die in Figur 2 verwendeten Muster.
Figur 4 den Handover-Betrieb.

### Beschreibung der Ausführungsbeispiele

Im bestehenden GSM-Netz (Festnetzseite), beispielsweise dem DMCS 900 Netz, wird eine Transcodierung; d. h. eine Umcodierung der Sprachdaten vom vorgegebenen sogenannten TRAU (Transcode and Rate Adaption Unit)-Format nach der GSM-Recommendation 08.60 in das Übertragungsformat des Kommunikationsnetzes, z. B. dem öffentlichen Fernsprechnetz PSTN (PCM-Werte im 64 kbit/s Rahmenformat), stets vorgenommen.

Vom Teilnehmer T11 wird eine Verbindung zum Teilnehmer T12 geschaltet. Die Transcodiereinrichtung, nachfolgend stets Transcoder genannt, TCE1, die dem Teilnehmer T11 zugeordnet ist, sendet im Verkehrskanal des A-Interfaces A-IF eine Kennungsinformation, welche dem zugeschalteten Transcoder TCE2 signalisiert, daß es sich um eine TFO (tandem free operation)-fähige Transcodiereinrichtung handelt. Tandemfrei bedeutet, dass zwischen zwei Transcodiereinrichtungen die Sprachsignale nicht mehrmals umcodiert werden müssen. Die beiden Transcoder schalten, nachdem sie diese Signalisierung erkannt haben, in den TFO-Betrieb und tauschen die Sprachparameter aus. Trifft der Transcoder auf einen nicht TFO-fähigen Transcoder, so erhält dieser die Kennung der Gegenstelle innerhalb einer gewissen Zeit nicht und fällt daher wieder in den normalen Betrieb zurück, in welchem er die Sprache (Sprachabtastwerte) codiert bzw. decodiert.

Die Interfaces von den Transcodern TCE1, TCE2 zu den Teilnehmern T11, T12, die z. B. über Funkfeststationen BTS anschaltbar sind, sind mit ATER-IF bezeichnet. Die Vermittlung zwischen den Transcodiereinrichtungen ist mit MSC bezeichnet.

### Gesprächsaufbau

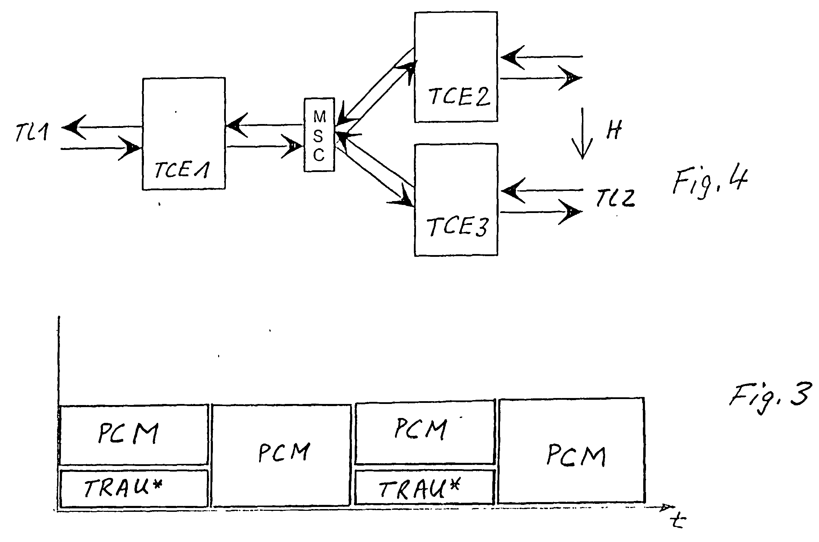

Beim Verbindungsaufbau werden abwechselnd Datenpakete von gleichzeitig übertragenen Abtastwerten und Kennungsinformation TRAU* anstelle der Signalparameter sowie reine Abtastwerte gesendet, wobei die abwechselnde Aussendung solcher Datenpakete so lange aufrecht erhalten wird, z.B. N = 3 mal, bis eine Quittierung TRAU*ACK insbesondere der Kennungsinformation durch die Umcodiereinrichtung TCE2 des Teilnehmers Tl2 erfolgt. Eine solche vorteilhafte Verbindungsaufbau-Steuerung ist in Figur 3 dargestellt. Der Grund für eine solche Verbindungsaufbau-Steuerung liegt in der Tatsache, daß eine reale Vermittlungseinrichtung MSC während des Zeitabschnittes von bis zu 1 Sekunde einen unbestimmten Betriebszustand annehmen kann infolge von "loop-back" und/oder offenen Schaltern. Um eine zuverlässige Synchronisierung für den TFO-Betrieb zu erzielen, werden Datenpakete gemäß Figur 3 abwechselnd gesendet. Ausgangspunkt ist ein Übergang von IDLE auf non-IDLE. Zuerst werden TRAU*-Rahmen gesendet mit PCM-Abtastwerten bezüglich der höherwertigen Bits. Anschließend werden für eine Verzögerungszeit bis zu 1 Sekunde reine PCM-Abtastwerte gesendet. Dann wieder TRAU*-Rahmen und PCM-Abtastwerte bezüglich höherwertiger Bits und wiederum reine PCM-Abtastwerte. Die abwechselnde Aussendung der Datenpakete wird jedoch nur N mal wiederholt, z.B. N = 3. Wird in diesem Zeitraum keine Quittierung TRAU*ACK von der Umcodiereinrichtung TCE2 empfangen, werden keine TRAU*-Rahmen mehr gesendet, sondern nur reine PCM-Abtastwerte. Es kann dann davon ausgegangen werden, daß die Gegenstelle dieses Format nicht versteht (die Gegenstelle ist nicht für den TFO-Betrieb eingerichtet). Es sind demnach zwei Signalisierungsrahmen vorhanden: 1. TRAU* als TFO-Ankündigung und 2. TRAU*ACK als TFO-Quittierung.

### Arbitrierungs-Vorgang

Der Transcoder TCE1 sendet am A-IF Interface anstelle der üblichen 8 Bit-PCM-Abtastwerte nun in den niedrigwertigsten 2 Bits dieser Abtastwerte einen TRAU-Rahmen (dieser wurde bisher zur Übertragung zwischen Funkstation und Transcoder verwendet und enthält Signalparameter zur Nutzdatenrekonstruktion). Der Datenstrom zwischen den Transcodern TCE1 und TCE2 ist demnach unterteilt in einen ersten Datenstrom mit Abtastwerten (PCM-Werten) und einen zweiten Datenstrom mit Signalparametern insbesondere TRAU-Rahmen. Beide Datenströme werden insbesondere während einer Verbindungsaufbauphase gleichzeitig übertragen. In einem solchen TRAU-Rahmen wird für eine vorgegebene Zeitdauer eine Kennungsinformation TRAU* gesendet. Sobald der TRAU* von der Gegenstelle erkannt wurde, wird in den TFO-Betrieb geschaltet. Der Vorgang wird von einem Timer T_{sync} überwacht. Läuft dieser ab, wird in den normalen Betrieb übergegangen.

Alternativ können auch n, n<9 Bits für die Signalisierung verwendet werden mit beliebigen Rahmenstrukturen.

Alternativ kann auf die Kennungsinformation TRAU* verzichtet werden und lediglich die TRAU-Rahmen-Synchronisationsinformation herangezogen werden.

Solange die Synchronisation T_{sync} läuft, werden im Anschluß an die Kennungsinformation TRAU* die vom Aₜₑᵣ-IF ankommenden TRAU-Rahmen in den niedrigwertigen 2 Bits des A-IF gesendet. Dies ermöglicht bei der Gegenstelle einen sofortigen Übergang in den TFO-Betrieb nach dem Erhalt von der Kennungsinformation TRAU*. Die höherwertigen 6 Bits der Abtastwerte werden mit den prozessierten höherwertigen 6 Bits PCM* gefüllt. Dies reduziert den Qualitätsverlust, falls die Gegenstelle kein TFO-fähiger Transcoder ist.

Wird innerhalb einer Wiederholungszeit Tᵣₑₚₑₐₜ (Tᵣₑₚₑₐₜ < T_{sync}) kein TRAU* empfangen, wird nochmals ein TRAU* gesendet. Der Zweck dieses zweiten TRAU* ist im Handover-Fall beschrieben.

### TFO-Betrieb (tandemfreier Betrieb)

Nach dem Erkennen des TRAU* am A-IF werden im Anschluß daran die folgenden TRAU Rahmen(-Inhalte) zum Aₜₑᵣ-IF durchgereicht. Die Anpassung der Controlbits sowie das Timing des Aₜₑᵣ-TRAU-Rahmens wird den lokalen Gegebenheiten angepaßt. Unbrauchbare Rahmen von der Gegenstelle (BFI=1, TRAU*) werden durch den vorherigen Rahmen ersetzt und ggf. ein Muting eingeleitet. Ein evtl. Jitter in der TRAU-Rahmenlänge von +/-2Bits muß ebenfalls ausgeglichen werden. Codec-Umsetzungen, DTX und Muting-Funktionen werden ebenfalls in dieser Richtung durchgeführt. Vorteil ist, daß keine Signalisierung im Gespräch erforderlich ist, falls sich die lokalen Gegebenheiten ändern.

Die gesendeten Muster und deren Aufbau sind in der Tabelle am Ende der Beschreibung aufgeführt.

Bei verschiedenen Anwendungen und Betriebsweisen, z.B. bei Einblenden von DTMF- (digital tone multi-frequency) Tönen in der Vermittlungseinrichtung MSC oder bei Multiparty-Betrieb kann die TFO-Synchronität verloren gehen; d.h. es erfolgt eine Zerstörung der Inband-Signalisierung, was zur Folge hat, daß ein Rückfall vom TFO-Mode in den nicht transcoderfreien Mode eintritt. Wenn eine derartige "Störung" eintritt, ist nach Beendigung dieser "Störung" nicht gewährleistet, daß der TFO-Mode wieder aufgenommen wird. Damit ein zuvor bestehender TFO-Mode wieder aufgenommen wird, wird erfindungsgemäß periodisch für eine vorgegebene Zeitdauer in Abständen eine Kennungsinformation TRAU* gesendet. Beispielsweise werden TRAU*-Rahmen periodisch alle 5 Sekunden, z.B. über eine Zeitspanne von 30 Sekunden gesendet. Nach Erkennen dieser TRAU*-Rahmen wird wie beim zuvor beschriebenen Arbitrierungs-Vorgang der TFO-Betrieb aufgenommen. Mit dieser Maßnahme erübrigt sich die Übertragung einer permanenten Signalisierinformation.

### Handover (Figur 4)

Der Handover-Fall von Transcoder TCE2 auf Transcoder TCE3 ist in die drei nachfolgend beschriebenen Fälle zu untergliedern.

### a) Handover H zu einem TFO-fähigen Transcoder

Zunächst wird der Abbruch der ankommenden TRAU-Rahmen registriert und ein Timer Tᵣₑₗₑₐₛₑ gestartet. Der Transcoder empfängt nach einer gewissen Zeit wieder einen TRAU* von dem neu zugeschalteten Transcoder TCE2, stoppt Tᵣₑₗₑₐₛₑ, sendet selbst einen TRAU* und bleibt im TFO-Betrieb. So kann der Transcoder ständig im TFO-Betrieb bleiben.

Kann der erste TRAU* nicht empfangen werden, da die Vermittlung MSC noch nicht durchgeschaltet hat, wird dessen zweiter TRAU* jedoch von TCE3 detektiert und führt zum TFO-Betrieb.

### b) Handover zu einem nicht TFO-fähigen Transcoder

Zunächst wird der Abbruch der ankommenden TRAU-Rahmen registriert und ein Timer Tᵣₑₗₑₐₛₑ gestartet. Der Timer Tᵣₑₗₑₐₛₑ läuft ab und der Transcoder geht wieder in den Arbitrierungszustand, in welchem er die ankommenden Daten am A-IF encodiert. In den abgehenden Datenstom am A-IF fügt er zu den TRAU-Rahmen nun decodierte PCM-Samples "PCM*" ein. Der zuerst gesendete TRAU ist ein TRAU*. Der Timer T_{sync} wird gestartet. Da vor Ablauf des Timers T_{sync} kein TRAU* empfangen wurde, wird in den normalen Betrieb zurückgefallen.

### c) Handover von einem nicht TFO-fähigen Transcoder

War die bisherige Gegenstelle (Transcoder TCE2) nicht TFO-fähig, kann der Transcoder den Handover nicht erkennen. Für die neue Gegenstelle (Transcoder TCE3) ist es jedoch ein normaler Gesprächsaufbau, in welchem sie, falls sie TFO-fähig ist, zuerst einen TRAU* sendet. Diesen empfängt der Transcoder, sendet ebenfalls einen TRAU* und geht in den TFO-Betrieb. Erfolgt die Durchschaltung verzögert, geht der erste TRAU* verloren und der zweite TRAU* nach Tᵣₑₚₑₐₜ führt zum Erfolg.

### Gesprächsabbruch

Das Gesprächsende wird entweder durch den Abbruch der TRAU-Rahmen am Aₜₑᵣ-IF, oder durch detektierte Fehler am A-IF eingeleitet. Der Ablauf ist dann wie im Falle 'Handover zu einem nicht TFO-fähigen Transcoder'.

### Verhalten bei Fehlern im TFO-Betrieb

### a) Einzel-Fehler am A-IF

Einzel-Fehler können nicht in den Datenbits der TRAU-Rahmen erkannt werden. Einzel-Fehler können nur in den Synchronisationsbits der TRAU-Rahmen erkannt werden. Maßnahmen sind deshalb daraus keine abzuleiten, da keine Aussage über die Datenbits des TRAU-Rahmens gegeben ist.

### b) Burst-Fehler am A-IF

Stark gestörte TRAU-Rahmen an das Ater-IF weiterzuleiten bedeutet, daß evtl. starke Störgeräusche beim Teilnehmer auftreten können. Daher wird bei Detektion eines einzelnen Fehlers von einem Burst-Fehler ausgegangen, der restliche TRAU-Rahmen verworfen und durch den zuvor gesendeten TRAU-Rahmen ersetzt. Folgende Maßnahmen vermeiden diese Störungen weitestgehend:
1. Doppelte Fehlerüberwachung:
   1.1 durch die Kontrolle der (TRAU-)Rahmen Synchronisation
   1.2 Kontrolle über ein periodisches Muster, beispielsweise eines Modulo-n Zählers, dessen Zählerzustände innerhalb des ersten Datenstromes übertragen werden.
2. Fehlerverschleierungs-Puffer
   Ein Puffer mit ca. x ms(hier 5 ms) erlaubt die Daten bis zum letzten TRAU Sync-Bit zu speichern und im Fehlerfall durch die zuletzt gültigen Daten zu substituieren.

Ist der Burst sehr lang, wird wie im Fall 'Handover zu einem nicht TFO-fähigen Transcoder' in den normalen Betrieb übergegangen.

**Tabelle**

| Muster | Beschreibung | Wert |
|---|---|---|
| TRAU | TRAU Rahmen gemäß GSM Recommendation 08.60 | |
| IDLE | Idle Pattern des A-IF '01010100' | 01010100 |
| PCM | von Idle verschiedene Daten, z.B. Sprachsamples | |
| TRAU* | spezieller TRAU Rahmen mit Sync-Information | |
| IDLE* | Idle nur in oberen 6 Bits '010101--' | 010101-- |
| PCM* | Sprachdaten nur in oberen 6 Bits | dddddd-- |

## Patentansprüche

1. Verfahren zum Übertragen von GSM-Daten zwischen einem rufenden und einem gerufenen Teilnehmer (T11, T12), wobei für das Übertragen ein vorgegebenes Rahmenformat verwendet wird mit folgenden Maßnahmen:
- der Datenstrom zwischen Umcodiereinrichtungen (TCE1, TCE2), die den Teilnehmern (Tl1, Tl2) zugeordnet sind, wird unterteilt in einen ersten Datenstrom mit PCM-Abtastwerten zur Übertragung und in einen zweiten Datenstrom mit Signalparametorn in Form von datenreduzierenden Transcodiereinrichtungsrahmen, im Folgenden als TRAU- Rohmen bezeichnet, zur Nutzdatenrekonstruktion und/oder zur Signalisierung, die zur transparenten Durchschaltung vorgesehen sind, wobei die so unterteilten Datenströme während einer Verbindungs aufbauphase gleichzeitig übertragen werden,
- während einer bestehenden Verbindung werden bei Verlust der transparenten Durchschaltung periodisch für eine vorgegebene Zeitdauer in Abständen TRAU-Rahmen mit Kennungsinformationen (TRAU*) zur Signalisierung eines tandemfreien Betriebszustandes gesendet.

2. Verfahren nach Anspruch 1, **dadurch gekennzeichnet, dass** der erste Datenstrom mit PCM-Abtastwerten aus den höherwertigen Bits einer parallelen Bitsequenz und der zweite Datenstrom in Form von datenreduzierten TRAU-Rahmen aus den entsprechenden niederwertigen Bits dieser Bitsequenz besteht.

3. Verfahren nach Anspruch 2, **dadurch gekennzeichnet, dass** der zweite Datenstrom durch Reduktion der Daten des ersten Datenstromes gebildet wird.

4. Verfahren nach Anspruch 2 oder 3, **dadurch gekennzeichnet, dass** die höherwertigen Bits als PCM-Abtastwerte übertragen werden.

5. Verfahren nach einem der Ansprüche 1 bis 4, **dadurch gekennzeichnet, dass** zu einem Verbindungsaufbau zwischen den Teilnehmern (TI1, TI2) anstelle der Signalparameter in Form von datenreduzierten TRAU-Rahmen für eine vorgegebene Zeitdauer TRAU-Rahmen mit Kennungsinformation (TRAU*) zur Signalisierung eines tandemfreien Betriebszustandes gesendet wird.

6. Verfahren nach einem der Ansprüche 1 bis 5, **dadurch gekennzeichnet, dass** beim Verbindungsaufbau abwechselnd Datenpakete von gleichzeitig übertragenen PCM-Abtastwerten und TRAU-Rahmen mit Kennungsinformation (TRAU*) anstelle der Signalparameter sowie reine PCM-Abtastwerte gesendet werden, wobei die abwechselnde Aussendung solcher Datenpakete so lange aufrecht erhalten wird, bis eine Quittierung der TRAU-Rahmen mit Kennungsinformation durch eine Umcodiereinrichtung (TCE2) des Gegenteilnehmers erfolgt.

7. Verfahren nach Anspruch 6, **dadurch gekennzeichnet, dass** nur noch PCM-Abtastwerte gesendet werden, wenn nach mehrmaliger Wiederholung, z.B. N = 3, der Datenpakete keine Quittierung erfolgt.

8. Verfahren nach Anspruch 6 oder 7, **dadurch gekennzeichnet, dass** nach dem Aussenden der Datenpakete TRAU-Rahmen mit PCM-Abtastwerten bezüglich der höherwertigen Bits gesendet werden.

9. Verfahren nach einem der Ansprüche 1 bis 8, **dadurch gekennzeichnet, dass** jene Umcodiereinrichtung (TCE2), die einem gerufenen Teilnehmer (T12) zugeordnet ist, nach Erhalt der TRAU-Rahmen mit Kennungsinformation (TRAU*) von der Umcodiereinrichtung (TCE1), die dem rufenden Teilnehmer (T11) zugeordnet ist, in den tandemfreien Übertragungsmode übergeht; d. h. die Signalparameter/TRAU-Rahmen transparent durchschaltet.

10. Verfahren nach einem der Ansprüche 2 bis 9, **dadurch gekennzeichnet, dass** fehlerhafte TRAU-Rahmen von der Gegenstelle durch vorherige TRAU-Rahmen ersetzt werden und ggf, ein Muting eingeleitet wird.

11. Verfahren nach einem der Ansprüche 2 bis 10, **dadurch gekennzeichnet, dass** bei Abbruch einer Verbindung ein Zähler gesetzt wird, dass im Falle des Empfangs eines TRAU-Rahmens mit Kennungsinformation (TRAU*) innerhalb einer vorgegebenen Zählzeit von einer neu zugeschalteten Umcodiereinrichtung (TCE3) der tandemfreie Obcrtragungstnode aufrechterhalten wird, dass bei Nichtempfang dieses TRAU-Rahmens mit Kennungsinformation (TRAU*) ein weiterer TRAU-Rahmen mit Kennungsinformation (TRAU*) gesendet wird und der tandemfreie Übertragungsmode bei fehlender Synchronisation abgebrochen wird.

12. Verfahren nach einem der Ansprüche 2 bis 11, **dadurch gekennzeichnet, dass** die jeweils zuletzt gesendeten Daten zwischengespeichert werden und bei Störungen fehlerhafte Daten ersetzen.

## Claims

1. Method for transmission of GSM data between a calling and a called subscriber (T11, T12), with a specified frame format being used for transmission, with the following measures:
- the data stream between code conversion devices (TCE1, TCE2) which are associated with the respective subscribers (T11, T12) is subdivided into a first data stream with PCM sample values for transmission, and into a second data stream with signal parameters in the form of data-reducing transcoding device frames, which are referred to in the following text as TRAU frames, for payload data reconstruction and/or for signalling, which are provided for transparent through-connection, with the data streams that have been subdivided in this way being transmitted at the same time during a connection setting-up phase,
- during an existing connection TRAU frames are sent with identification information (TRAU*) for signalling of a tandem-free operating state, periodically for a predetermined time period, if transparent through-connection is lost.

2. Method according to Claim 1, **characterized in that** the first data stream with PCM sample values comprises the most significant bits of a parallel bit sequence, and the second data stream in the form of data-reduced TRAU frames comprises the corresponding least significant bits of this bit sequence.

3. Method according to Claim 2, **characterized in that** the second data stream is formed by reduction of the data from the first data stream.

4. Method according to Claim 2 or 3, **characterized in that** the most significant bits are transmitted as PCM sample values.

5. Method according to one of Claims 1 to 4, **characterized in that** TRAU frames with identification information (TRAU*) for signalling of a tandem-free operating state are sent, instead of the signal parameters in the form of data-reduced TRAU frames, for a predetermined time TRAU in order to set up a connection between the subscribers (T11, T12).

6. Method according to one of Claims 1 to 5, **characterized in that**, when setting up a connection, data packets of simultaneously transmitted PCM sample values and TRAU frames with identification information (TRAU*) are sent alternately instead of the signal parameters as well as pure PCM sample values, with the alternate transmission of such data packets being maintained until the TRAU frames with identification information are acknowledged by a code conversion device (TCE2) belonging to the other subscriber.

7. Method according to Claim 6, **characterized in that** PCM sample values are sent only when no acknowledgement has been received for the data packets after repeated repetition, for example N = 3.

8. Method according to Claim 6 or 7, **characterized in that**, after the transmission of the data packets, TRAU frames are sent with PCM sample values relating to the most significant bits.

9. Method according to one of Claims 1 to 8, **characterized in that that** code conversion device (TCE2) which is associated with a called subscriber (TI2) changes to the tandem-free transmission mode after reception of the TRAU frames with identification information (TRAU*) from the code conversion device (TCE1) which is associated with the calling subscriber (T11), that is to say the signal parameters/TRAU frames are connected through transparently.

10. Method according to one of Claims 2 to 9, **characterized in that** TRAU frames with errors are replaced by previous TRAU frames at the opposite end, and muting may be initiated.

11. Method according to one of Claims 2 to 10, **characterized in that**, when a connection is terminated, a counter is set, **in that**, if a TRAU frame with identification information (TRAU*) is received within a predetermined counting time by a newly connected code conversion device (TCE3), the tandem-free transmission mode is maintained while, if this TRAU frame with identification information (TRAU*) is not received, a further TRAU frame with identification information (TRAU*) is sent, and the tandem-free transmission mode is terminated in the absence of synchronization.

12. Method according to one of Claims 2 to 11, **characterized in that** the respective most recently transmitted data is temporarily stored, and replaces data with errors in the event of disturbances.

## Revendications

1. Procédé de transmission de données GSM entre un abonné appelant et un abonné appelé (T11, T12), un format cadre prédéfini étant utilisé pour la transmission avec les mesures suivantes :
- le flux de données entre les dispositifs de transcodage (TCE1, TCE2), qui sont associés aux abonnés (T11, T12), est divisé en un premier flux de données avec des échantillons PCM pour la transmission et en un deuxième flux de données avec des paramètres de signal en forme de cadres de transcodage, appelé ci-après cadres TRAU, réduisant les données, pour la reconstruction des données utiles et/ou pour la signalisation prévues pour la commutation transparente, les flux de données ainsi divisés étant transmis simultanément pendant une phase d'établissement d'une communication, et
- pendant une communication existante, des cadres TRAU, ayant des informations de codage (TRAU*) sont envoyés périodiquement à distance pendant une période prédéfinie en cas de perte de commutation transparente pour signaler un état de service sans tandem.

2. Procédé selon la revendication 1,
**caractérisé en ce que**
le premier flux de données ayant des échantillons PCM est constitué des bits d'ordre supérieur d'une séquence de bits parallèle et le deuxième flux de données en forme de cadres TRAU à données réduites de bits d'ordre inférieur correspondants de cette séquence de bits.

3. Procédé selon la revendication 2,
**caractérisé en ce que**
le deuxième flux de données est formé par réduction des données du premier flux de données.

4. Procédé selon la revendication 2 ou 3,
**caractérisé en ce que**
les bits d'ordre supérieur sont transmis en tant qu'échantillons PCM.

5. Procédé selon l'une quelconque des revendications 1 à 4,
**caractérisé en ce que**
pour établir une communication entre les abonnés (T11, T12), des cadres TRAU ayant une information de codage (TRAU*) sont envoyés à la place des paramètres de signal en forme de cadres TRAU à données réduites, pendant une durée prédéfinie pour signaler un état de service sans tandem.

6. Procédé selon l'une quelconque des revendications 1 à 5,
**caractérisé en ce que**
lors de l'établissement de la communication, des paquets de données d'échantillons PCM, transmis simultanément, et de cadres TRAU ayant une information de codage (TRAU*) sont envoyés en alternance à la place des paramètres de signal ainsi que de purs échantillons PCM, l'expédition en alternance de tels paquets de données étant maintenue jusqu'à ce qu'un dispositif de transcodage (TCE2) de l'autre abonné acquitte les cadres TRAU ayant une information de codage.

7. Procédé selon la revendication 6,
**caractérisé en ce que**
seuls des échantillons PCM sont encore envoyés s'il n'y a pas d'acquittement après la répétition à plusieurs reprises, par exemple, N = 3, des paquets de données.

8. Procédé selon la revendication 6 ou 7,
**caractérisé en ce qu'**
après l'expédition des paquets de données, des cadres TRAU sont envoyés avec des échantillons PCM concernant les bits d'ordre supérieur.

9. Procédé selon l'une quelconque des revendications 1 à 8,
**caractérisé en ce que**
le dispositif de transcodage (TCE2), qui est associé à un abonné appelé (T12), passe en mode de transmission sans tandem après la réception des cadres TRAU ayant une information de codage (TRAU*), par le dispositif de transcodage (TCE1) qui est associé à l'abonné appelant (T11) ; autrement dit, les paramètres de signal/cadres TRAU sont commutés de façon transparente.

10. Procédé selon l'une quelconque des revendications 2 à 9,
**caractérisé en ce que**
des cadres TRAU défectueux sont remplacés, par le poste correspondant, par des cadres TRAU précédents et, le cas échéant, un blocage antibruit, est initié.

11. Procédé selon l'une quelconque des revendications 2 à 10,
**caractérisé en ce qu'**
un compteur est activé en cas d'interruption d'une communication, **en ce que** le mode de transmission sans tandem est maintenu par un dispositif de transcodage nouvellement commuté en cas de réception d'un cadre TRAU ayant une information de codage (TRAU*) dans les limites d'une période de comptage prédéfinie, un autre cadre TRAU ayant une information de codage (TRAU*) est envoyé en cas de non-réception de ce cadre ayant une information de codage (TRAU*), et le mode de transmission sans tandem est abandonné en l'absence de synchronisation.

12. Procédé selon l'une quelconque des revendications 2 à 11,
**caractérisé en ce que**
les dernières données envoyées sont entreposées et remplacent les données défectueuses en cas de perturbations.
